# EUROPEAN PATENT APPLICATION

(11) **EP 1 364 704 A1**
(43) Date of publication of application: **26.11.2003**
(21) Application number: 02710369.6
(22) Date of filing: 29.01.2002
(51) Int. Cl.: B01J 20/20, C01B 31/02

(54) **CARBON NANOHORN ADSORBENT AND PROCESS FOR PRODUCING THE SAME**

(30) Priority: 29.01.2001 JP 2001020452
(71) Applicant: JAPAN SCIENCE AND TECHNOLOGY CORPORATION, Kawaguchi-shi, Saitama 332-0012 (JP); NEC Corporation, Minato-ku, Tokyo 108-8001 (JP); Institute of Research and Innovation, Tokyo 113-0034 (JP)
(72) Inventor: IIJIMA, Sumio, Nagoya-shi, Aichi 468-0011 (JP); YUDASAKA, Masako, Tsukuba-shi, Ibaraki 300-2635 (JP); KOKAI, Fumio, Tsukuba-shi, Ibaraki 305-0045 (JP); TAKAHASHI, Kunimitsu, Noda-shi, Chiba 278-0051 (JP); KASUYA, Daisuke, Kashiwa-shi, Chiba 277-0843 (JP); KANEKO, Katsumi, Ichihara-shi, Chiba 299-0117 (JP); MURATA, Katsuyuki, Funabashi-shi, Chiba 273-0003 (JP)
(74) Representative: Calamita, Roberto
(86) International application number: JP0200648
(87) International publication number: WO02060579

(57) **Abstract**

A novel carbon nanohorn adsorbent which does not necessitate a high-temperature treatments lightweight and chemically stable, and can selectively adsorb molecules based on the molecular sieve effect; and a process for producing the adsorbent. The process comprises oxidizing a single-wall carbon nanohorn aggregate while controlling oxidative conditions to therebyobtain the carbon nanohorn adsorbent, which have, in the tubular parts, pores having a regulated diameter.

## Description

### Technical Field

The invention of the present application relates to a carbon nanohorn adsorbent and a process for producing the same. More specifically, the invention of the present application relates to an innovative carbon nanohorn adsorbent lightweight, chemically stable and capable selectively adsorbing molecules based on the molecular sieve effect and a process for producing the adsorbent without necessitating a high-temperature treatment.

### Background Art

Those conventionally widely and generally used carbonaceous adsorbents include, as shown in Table 2 shown in a page hereafter, activated carbon, activated fibers, high specific surface area activated carbon and the like, and the shape of fine pores formed in these carbonaceous adsorbents is a space (hereinafter referred to as a slit-type) sandwiched between two slabs and the size distribution is wide. Therefore, based on the use purposes, the shape of the fine pores and the fine pore diameter distribution have been controlled by controlling the thermal decomposition methods, activation methods, CVD methods, thermal modification method and the like. However, such control methods all necessitate treatments at a high temperature not lower than 600°C and for example, in a gas activation method, treatment is carried out at as high as 750 to 1,100°C using steam, carbon dioxide, air, and the like. Furthermore, even if any of these methods are employed, it has been difficult to control the fine pore distribution in molecular size level.

Accordingly, conventional carbonaceous adsorbents are scarcely provided with the molecular sieve effect and for example, in the case of separation in molecular level, it is carried out not based on the fine pore diameter of the carbonaceous adsorbents but based on the difference of the rate of adsorption depending on the types of the object molecules to be adsorbed.

On the other hand, as adsorbents other than the carbonaceous adsorbents and having fine pores of about a molecular size and a molecular sieve effect, zeolites have been known. However, zeolites are inferior in chemical stability since they are denatured by strong acids or strong alkalis, and they have disadvantages with the high densities and heavy weights.

Therefore, in consideration of the above-mentioned situations, the invention of the present application aims to solve conventional technical problems and provide an innovative carbon nanohorn adsorbent lightweight and chemically stable and capable of selectively adsorbing molecules based on the molecular sieve effect and a process for producing the adsorbent without necessitating treatment at a high temperature.

### Disclosure of Invention

The invention of the present application provides the following invention so as to solve the above-mentioned problems.

That is, firstly, the invention of the present application provides an adsorbent of a single-wall carbon nanohorn aggregate which is characterized in that fine pores are opened with their diameters regulated in the wall parts and tip parts of single-wall carbon nanohorns. With respect to the invention, secondly, the invention of the present application provides a carbon nanohorn adsorbent whose fine pore diameter is regulated to be in the range of 0.1 to 3 nm. Thirdly, the invention of the present application provides a carbon nanohorn adsorbent whose fine pore diameter is regulated to be in the range of 0.26 to 0.525 nm. Fourthly, the invention of the present application provides a carbon nanohorn adsorbent whose fine pore diameter is regulated to be in the range of 0.525 to 0.92 nm. Fifthly, the invention of the present application provides a carbon nanohorn adsorbent whose fine pore diameter is regulated to be 0.92 nm or larger.

Sixthly, the invention of the present application provides a process for producing a carbon nanohorn adsorbent comprising opening fine pores with their diameter regulated in the wall parts and tip parts of single-wall carbon nanohorns by subjecting a single-wall carbon nanohorn aggregate to oxidizing treatment while controlling the oxidizing conditions. Furthermore, according to the process of the above-mentioned invention, the invention of the present application, seventhly, provides a process for producing a carbon nanohorn adsorbent, wherein the oxidizing conditions are controlled as an oxygen pressure in the range of 0 to 760 Torr, a treatment temperature in the range of 250 to 700°C, and a treatment duration in the range of 0 to 120 minutes, eighthly, the invention of the present application provides a process for producing a carbon nanohorn adsorbent, wherein the oxidizing conditions are controlled as an oxygen pressure of 760 Torr and a treatment temperature of 300°C, ninthly, the invention of the present application provides a process for producing a carbon nanohorn adsorbent, wherein the oxidizing conditions are controlled as an oxygen pressure of 760 Torr and a treatment temperature of 350°C, tenthly, the invention of the present application provides a process for producing a carbon nanohorn adsorbent, wherein the oxidizing conditions are controlled as an oxygen pressure of 760 Torr and a treatment temperature of 420°C, and further eleventhly, the invention of the present application provides a process for producing a carbon nanohorn adsorbent, wherein the oxidizing treatment is heating in an acid solution having oxidizing action.

### Brief Description of Drawings

Fig. 1 is a graph illustrating the selective adsorption properties of a carbon nanohorn of embodiment; and
Figs. 2a to 2d are graphs illustrating the adsorption isotherms of a carbon nanohorn for Ar, N₂, CH₄, and SF₆, respectively.

### Best Modes for Carrying Out the Invention

The invention of the present application can be characterized as described above and hereinafter, embodiments of the invention will be described.

Inventors of the invention of the present application have found that a carbon nanohorn aggregate composed by agglomerating a plurality of single-wall carbon nanohorns while the conical parts being set in the outside has an adsorbing function without any activation treatment and have already proposed (Japanese Patent Application No. 2000-358362) its application as a novel functional material such as an adsorbent. The carbon nanohorn is a tubular single-wall carbon nanotube having conical shape in one end and the tubular part has a diameter of about 2 to 3 nm and a length of about 30 to 50 nm. With respect to a known carbon nanohorn adsorbent, adsorption of an object to be adsorbed is carried out in vertically long (cylinder type) gaps which are formed between neighboring single-wall carbon nanohorns and have a length of about 30 to 40 nm and a cross-section surface area of about atom size.

A carbon nanohorn adsorbent of the invention of the present application is the foregoing known carbon nanohorn adsorbent in which fine pores are opened with their diameters regulated in the wall parts and tip parts of the respective single-wall carbon nanohorns. The diameter of the fine pores are controllable to be an any size in the range of about 0.1 to 3 nm depending on the conditions in the opening process and the fine pore diameter distribution can be evenly controlled.

Accordingly, the carbon nanohorn adsorbent of the invention of the present application can take an object substance to be adsorbed in the inside of the carbon nanohorns from the opened parts and adsorb it in the case the object substance to be adsorbed is smaller than the diameter of the opened fine pores. Since the object substance can be adsorbed in the entire inner spaces of the carbon nanohorns, the adsorbent with extremely high adsorption capacity can be obtained. On the contrary, in the case an object substance to be adsorbed is larger than the diameter of the opened fine pores, the object substance is adsorbed in the outside of the carbon nanohorns. Here, since the adsorption capacity in the inside of the carbon nanohorns is high in comparison with the adsorption capacity in the outside, the carbon nanohorn adsorbent can adsorb a large quantity of a substance smaller than the fine pore diameter.

Further, for example, use of some carbon nanohorn adsorbents which have fine pores opened with respectively different diameters by controlling the diameters of the fine pores, in combination gives an adsorbent for absorbing only molecules with a desired size, that is, a molecular sieve. Practically, an adsorbent capable of selectively adsorbing only desired molecules could be consequently obtained.

The carbon nanohorn adsorbent of the invention of the present application can be obtained by oxidizing a single-wall carbon nanohorn aggregate while controlling the oxidizing conditions.

As the single-wall carbon nanohorn aggregate, those produced by a variety of conventionally known methods can be used. For example, it can be produced by a synthesis process such as a CO₂ laser abrasion method or the like using a catalyst-free graphite as a target at a room temperature in Ar atmosphere of 760 Torr.

The oxidizing treatment includes, for example, heating treatment carried out while controlling the treatment conditions such as the ambient gas, the treatment temperature, the treatment duration and the like. Practically, for example, heating under oxidizing·atmosphere can be exemplified. The atmosphere for such oxidizing treatment is preferably dry oxidizing atmosphere. In the case where water is contained in the ambient gas, since the chemical reactivity at the time of heating is increased and owing to the humidity change, it becomes difficult to precisely control the treatment temperature, it is not preferable. The dry oxidizing atmosphere can be produced by, for example, using dry oxygen gas or dry nitrogen gas (an inert gas) containing about 20% of oxygen. The dry oxygen gas and the dry inert gas are those gases from which water in component gas is removed and for example, various high purity gases generally available can be used.

Although the atmospheric pressure differs depending on the types of the gases, oxygen partial pressure controlled to be 0 to 760 Torr can be exemplified. The treatment temperature may be controlled in the range of 250 to 700°C, preferably in a relatively low temperature range of 250 to no higher than 600°C. The treatment duration in such oxidizing treatment conditions can be adjusted in the range of 0 to 120 minutes.

Fine pores with an optional size in a range about 0.1 to 3 nm can be opened in the wall parts and the tip parts of carbon nanohorns by variously controlling the above-mentioned oxidizing treatment conditions. Adjustment of the fine pore size by oxidizing treatment conditions is practically carried out as follows: for example, fine pores with a size of 0.26 to 0.525 nm, 0.525 to 0.92 nm, and 0.92 nm or larger can be opened by controlling the oxidizing treatment conditions as the treatment temperature at 300°C, 350°C, and 420°C, respectively, in oxygen pressure of 760 Torr. Since the treatment duration in these cases is changed depending on the quantity or the like of the carbon nanohorns, it can be adjusted in the range of 0 to about 120 minutes. Incidentally, the oxidizing treatment may be one-step treatment in which the temperature is kept constant in the above-mentioned temperature ranges as exemplified here and multi-step treatment in which the temperature is changed to be a plurality of levels in the above-mentioned temperature ranges and also, a treatment method in which the temperature is changed time to time in the above-mentioned temperature ranges may be possible.

Further, other than the above-mentioned methods, oxidizing treatment may be carried out by heating a single-wall carbon nanohorn aggregate in an acid solution having oxidizing action such as nitric acid, hydrogen peroxide, and the like.

The carbon nanohorn adsorbent of the invention of the present application obtained such a manner as described above is lightweight and chemically stable since its constituent unit is graphite. Further, in addition to the conventional characteristic that the adsorbent is provided with adsorption capacity without carrying out high temperature treatment such as activation treatment, the carbon nanohorn adsorbent of the invention of the present application is provided with selectively adsorbing property and highly efficient molecular sieve effect. Accordingly, the invention of the present application discovers innovative characteristics of a carbon nanohorn adsorbent which have not been known before and provides a novel functional material useful in a wide range of fields such as chemical engineering fields.

Hereinafter, embodiments of the invention of will be described more in details by exemplifying Examples along with appended drawings.

### Examples

### (Example 1)

CO₂ laser beam of 10.6 µm wavelength with a beam diameter of 10 mm was radiated to a φ 30 x 50 mm graphite target rotated in a reaction chamber at a room temperature and 760 Torr in Ar atmosphere and carbon nanohorns as products were recovered from a collection filter. The obtained carbon nanohorns were in form of a single-wall carbon nanohorn aggregate having a spherical shape with about 70 nm diameter and formed in a manner that the tubular parts of a plurality of carbon nanotubes were gathered in the center side and the conical parts were projected out the surface just like horns. Each carbon nanohorn had a tubular part with a diameter of about 2 to 3 nm and a length of about 30 nm.

The carbon nanohorns were subjected to oxidizing treatment for ten minutes at three different treatment temperatures; 300°C, 350°C, and 420°C, and in oxygen pressure 760 Torr. Untreated carbon nanohorn was denoted as NH0, and carbon nanohorns after the treatment were denoted as NH300, NH350, and NH420 for the respective treatment temperatures and their specific surface areas, fine pore volumes, densities, closed pore volumes, fine pore shapes, and fine pore diameter distributions were measured. The results are shown in Table 1.

**Table 1**

| Carbon nanohorn adsorbent | Specific surface area (m²/g) | Fine pore volume (ml/g) | Density (g/ml) | Closed pore volume (ml/g) | Fine pore shape | Fine pore diameter distribution |
|---|---|---|---|---|---|---|
| NH 0 | 308 | 0.11 | 1.25 | 0.36 | Tubular type | Less than 0.26 nm |
| NH 300 | 330 | 0.15 | 1.78 | 0.12 | | 0.26-0.525nm |
| NH 350 | 480 | 0.24 | 1.86 | 0.10 | | 0.525-0.92nm |
| NH 420 | 1006 | 0.47 | 2.05 | 0.05 | | 0.92 nm or larger |

In Table 1, the specific surface area is a value obtained by measurement of nitrogen adsorption isotherm at 77K; the fine pore volume is a value calculating by assuming the liquidnitrogen density. Further, the closed pore volume is a value calculated by comparing the density obtained by a high pressure He buoyancy method with the density of a solid carbon (graphite) having no closedpore. Further, for comparison, Table 2 shows the specific surface area, the fine pore volume, the density, the fine pore shape, and the fine pore diameter distribution of conventional carbonaceous adsorbents, activated carbon (*1), activated carbon fiber (*2), and a high specific surface area activated carbon (*3) for the sake of comparison.

**Table 2**

| Carbonaceous adsorbent | Specific surface area (m²/g) area (m²/g) | Fine pore volume (ml/g) (ml/g) | Density (g/ml) | Fine pore shape | Fine pore diameter distribution |
|---|---|---|---|---|---|
| Activated carbon (Wako Pure Chemical Industries, Ltd.) (certified spec)^{*1} | 12000 (500-1000) | 0.86 | (1.8-2. 1) | slit type | Wide distribution from micro pore (2nm or smaller) to meso pore (2 to 50 nm) |
| Activated carbon fiber P5^{*2} | 900 | 0.34 | 1.91 | | about 0.75 nm |
| High specific surface area activated carbon AX21^{*3} | 2400 | 1.49 | 1.95 | | about 1.3 nm and relatively wide distribution of meso pores |

| | | | | | |
|---|---|---|---|---|---|
| *1: Regarded as a general activated carbon. With respect to the specific surface area, attributed to different measurement methods. | | | | | |
| *2: One having fine pores with a small fine pore diameter and relatively even diameter among activated carbon fibers. | | | | | |
| *3 : One of activated carbons having the largest specific surface area. | | | | | |

The activated carbon (*1) in Table 2 is an activated carbon regarded as most general one. The specific surface area is a certified spec and it cannot be compared simply since the measurement methods are different and the value written in the parentheses ( ) is estimated value which might be obtained by same measurement method as that shown in Table 1. The activated carbon fiber (*2) is one with a relatively small and even fine pore diameter among various activated carbon fibers. The high specific surface area activated carbon (*3) is one of activated carbons having the largest specific surface area.

From Table 1, it is made clear that as the treatment temperature is increased, the closed pore volume is decreased and the specific surface area and the fine pore volume are increased and accordingly fine pores are opened in the carbon nanotubes by oxidizing treatment.

### (Example 2)

Using molecules with various diameters, the molecular sieve effect of NH0, NH300, NH350, and NH420 same as those of Example 1 was investigated.

As non-adsorptive substance molecules, He, Ar, N₂, CH₄, SF6, and C_{60,} were selected since they have substantially spherical molecular shape and are only affected by London dispersion force among molecules, that is, molecules free from priority intermolecular interaction. The diameters of them are shown in the following Table 3.

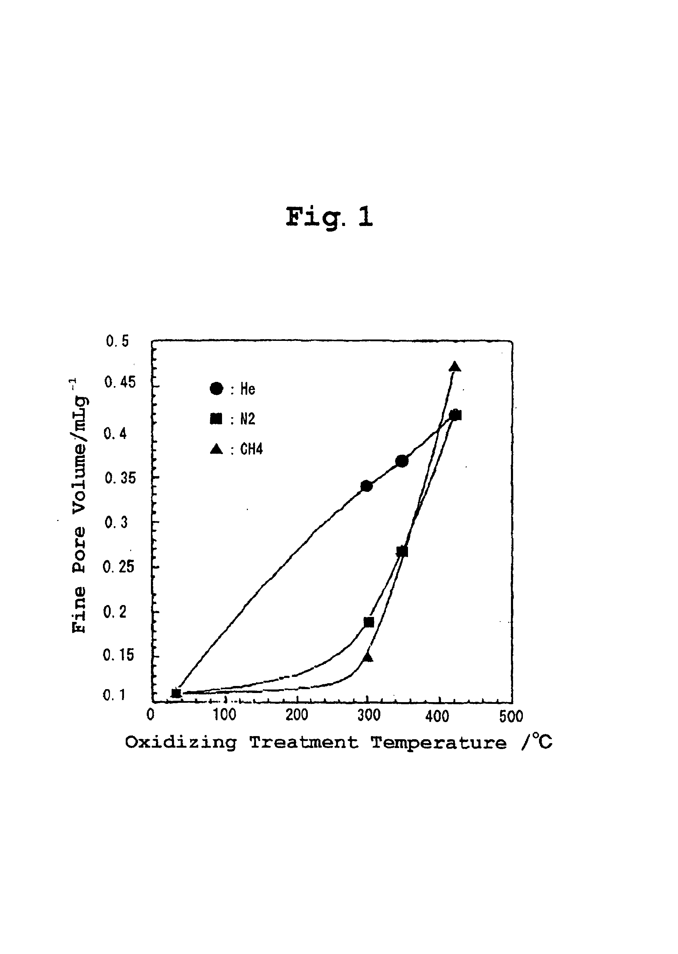

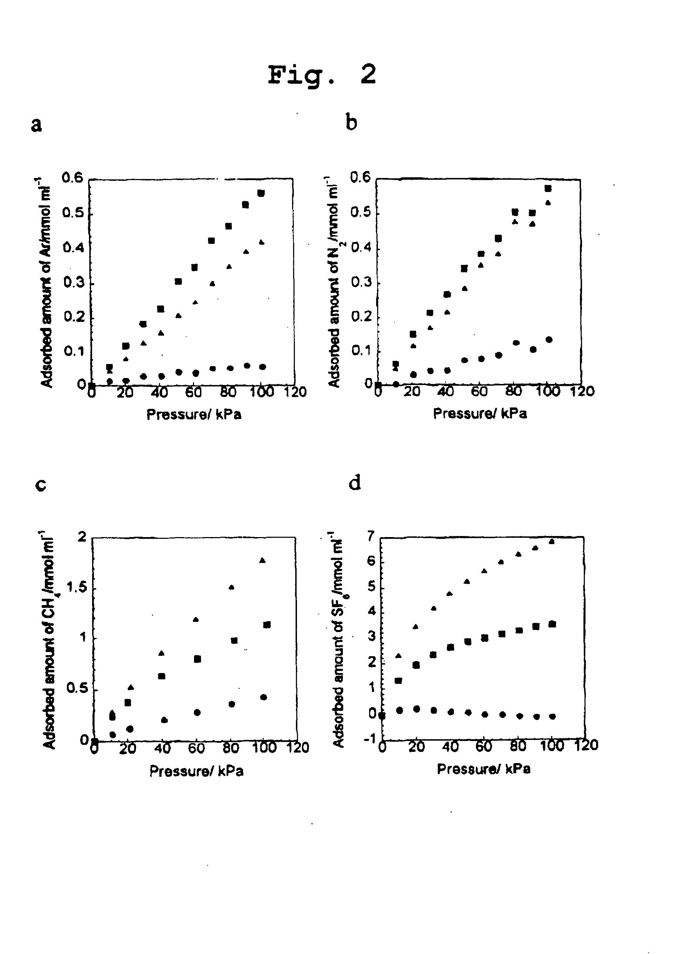

Among these molecules. He, Ar, N₂, CH₄, and SF₆ were subjected to an adsorption isotherm test and the results are shown in Fig. 1 and Fig. 2.

Fig. 1 is a graph illustrating the fine pore volumes calculated from the adsorption quantities of He, N₂, and CH₄ and NH0 which was not subjected to oxidizing treatment scarcely adsorbed molecules. For example, NH300 showed a large adsorption quantity for He but a small adsorption quantity for N₂, and a further smaller adsorption quantity for CH₄. That is, it was confirmed that the adsorption capability differed depending on the types of gases. Further, as the treatment temperature was higher, the adsorption quantities were increased more for all of the gases.

Fig. 2(a) to 2(d) are graphs of adsorption isotherms relevant to the adsorption of Ar, N₂, CH₄, and SF₆ in the inside of the carbon nanohorns.

The quantity of each molecule adsorbed in the inside of the carbon nanohorns was a value calculated by subtracting the quantity of the molecule adsorbed in the carbon nanohorn (NHO) without opening from the quantity of the molecule adsorbed in the entire body of the carbon nanohorn . The markers in the figure show a circle for NH300, a square for NH350, and a triangle for NH420.

From the data of the foregoing adsorption isotherms, the fine pore volume in the inside of each carbon nanohorn into which respective molecules could enter was calculated and shown in Table 3. The calculation of the fine pore volume was based on Henry equation of adsorption isotherm having linearity of adsorption characteristics. Further, the fine pore volume for C₆₀ was a value approximated from a transmission electron microscopic (TEM) image.

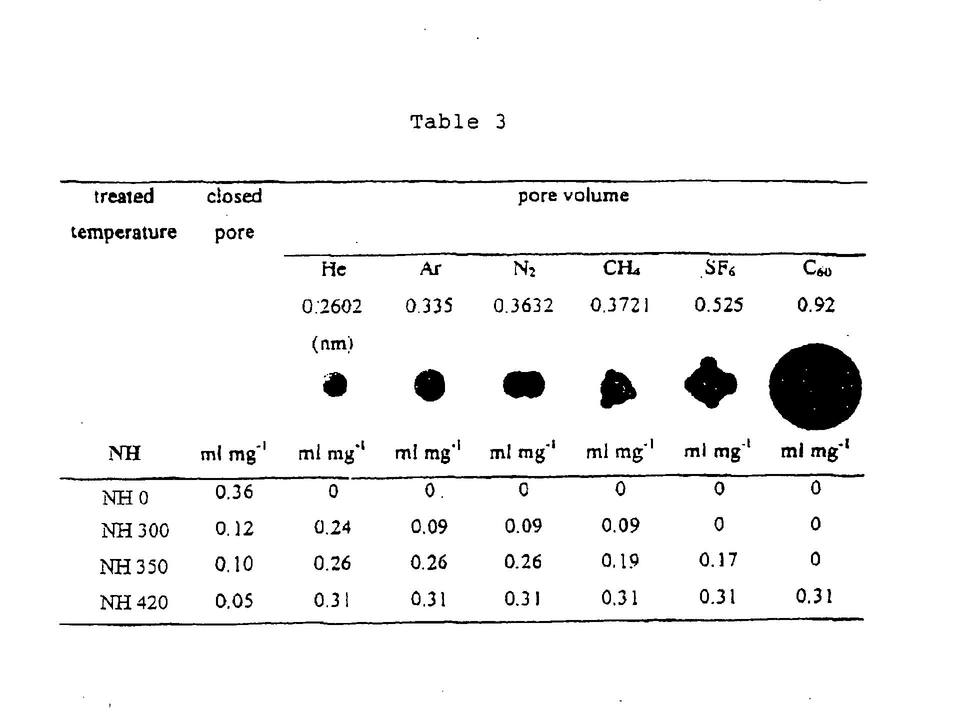

From Table 3, it was found that NH300 was easy to adsorb He in the inside and although it adsorbed Ar, N₂, and CH₄ in the inside, it did not adsorb C₆₀ and SF₆ at all. Further, it was shown that the openings formed in NH300 by oxidizing treatment at 300°C was in the range of 0.26 to 0.525 nm.

NH350 was found not adsorbing C₆₀ in the inside at all and adsorbing He, Ar, N₂, CH₄, and SF₆ in the inside. That is, it showed that the openings formed in NH350 by oxidizing treatment at 350°C was in the range of 0.525 to 0.92 nm.

Further, NH420 was found capable of adsorbing all molecules of He, Ar, N₂, CH₄, SF₆, and C₆₀ in the inside. That is, it showed that the openings formed in NH420 by oxidizing treatment at 420°C was 0.92 nm or larger.

From these results, the opening diameter of a carbon nanohorn adsorbent can be easily regulated by increasing the temperature for oxidizing a carbon nanohorn aggregate. It was found that a molecule with a size smaller than the opening diameter could be selectively adsorbed by controlling the conditions of the oxidizing treatment. That is, the carbon nanohorn adsorbent of the invention of the present application was found capable of selectively adsorbing molecules with a desired molecular size by controlling the conditions of oxidizing treatment. Further, it was found that a molecular sieve could be obtained by combining the carbon nanohorn adsorbents.

According to the invention of the present application, it was found possible to obtain a molecular sieve by oxidizing treatment at a temperature of 700°C or lower, in this Example as relatively low as 420°C or lower. Further, a fine molecular sieve in nm order can be accomplished. That cannot be achieved by a conventional molecular sieve.

The molecular sieve effect is probable to be usable for drug delivery in human body.

It is not intended that the invention be limited to the illustrated embodiments. It goes without saying that a variety of aspects are possible in matters of detail.

### Industrial Applicability

As described in details, the invention provides an innovative carbon nanohorn adsorbent, which does not necessitate a high-temperature treatment and is lightweight, chemically stable and capable selectively adsorbing molecules based on the molecular sieve effect and a process for producing the adsorbent.

## Claims

1. An adsorbent of a single-wall carbon nanohorn aggregate having fine pores openedwith their diameters regulated in the wall parts and tip parts of single-wall carbon nanohorns.

2. The carbon nanohorn adsorbent according to claim 1, wherein the fine pore diameter is regulated to be in the range of 0.1 to 3 nm.

3. The carbon nanohorn adsorbent according to claim 1 or 2, wherein the fine pore diameter is regulated to be in the range of 0.26 to 0.525 nm.

4. The carbon nanohorn adsorbent according to claim 1. or 2, wherein the fine pore diameter is regulated to be in the range of 0.525 to 0.92 nm.

5. The carbon nanohorn adsorbent according to claim 1 or 2, wherein the fine pore diameter is regulated to be 0.92 nm or larger.

6. A process for producing a carbon nanohorn adsorbent comprising opening fine pores in the wall parts and tip parts of single-wall carbon nanohorns with a diameter regulated by subjecting a single-wall carbon nanohorn aggregate to oxidizing treatment while controlling the oxidizing conditions.

7. The process for producing a carbon nanohorn adsorbent according to claim 6, wherein the oxidizing conditions are controlled as an oxygen pressure in a range of 0 to 760 Torr, a treatment temperature in a range of 250 to 700°C, and a treatment duration in the range of 0 to 120 minutes.

8. The process for producing a carbon nanohorn adsorbent according to claim 6 or 7, wherein the oxidizing conditions are controlled as an oxygen pressure of 760 Torr and a treatment temperature of 300°C.

9. The process for producing a carbon nanohorn adsorbent according to claim 6 or 7, wherein the oxidizing conditions are controlled as an oxygen pressure of 760 Torr and a treatment temperature of 350°C.

10. The process for producing a carbon nanohorn adsorbent according to claim 6 or 7, wherein the oxidizing conditions are controlled as an oxygen pressure of 760 Torr and a treatment temperature of 420°C.

11. The process for producing a carbon nanohorn adsorbent according to claim 3, wherein the oxidizing treatment is heating in an acid solution having oxidizing action.
